# EUROPÄISCHE PATENTSCHRIFT

(11) **EP 2 434 897 B1**
(45) Veröffentlichungstag und Bekanntmachung des Hinweises auf die Patenterteilung: **09.08.2017**
(21) Anmeldenummer: 10721806.7
(22) Anmeldetag: 28.05.2010
(51) Int. Cl.: A21B 7/00, A21B 1/46, A21B 1/48

(54) **BACKAUTOMAT**
AUTOMATIC BAKING MACHINE
AUTOMATE DE CUISSON AU FOUR

(30) Priorität: 29.05.2009 DE 102009026619
(43) Veröffentlichungstag der Anmeldung: 04.04.2012
(73) Patentinhaber: R. Weiss Verpackungstechnik GmbH & Co. KG, 74564 Crailsheim (DE)
(72) Erfinder: WEISS, Reinald, 91626 Schopfloch (DE)
(74) Vertreter: Schlief, Thomas P.
(86) Internationale Anmeldenummer: PCT/EP2010/057394
(87) Internationale Veröffentlichungsnummer: WO 2010/136555

(56) Entgegenhaltungen:
- EP-A1- 0 708 421
- EP-A2- 1 680 961
- EP-A2- 1 688 042
- DE-A1- 3 145 792
- DE-A1- 10 116 423
- DE-A1-102005 002 475
- DE-A1-102005 012 536
- DE-A1-102005 057 866
- DE-C- 641 037
- FR-A1- 2 508 274
- FR-A1- 2 821 524
- US-A- 4 100 848
- US-A- 4 349 714

## Beschreibung

Die Erfindung betrifft einen Backautomaten nach dem Oberbegriff des Anspruchs 1.

Ein derartiger Backautomat zur Aufstellung insbesondere in Supermärkten ist beispielsweise aus der EP 1 688 042 A2 bekannt. Bei diesem Backautomaten werden Backwaren in Träger eines aufgabeseitigen Paternosteraufzuges (auch kurz "Paternoster" genannt) eingelegt und dort vorgehalten. Bei Anforderung durch eine Steuereinheit wird eine entsprechend bemessene Anzahl Backwaren linear von den bestückten Trägern in einen Durchlaufbackofen gefördert und nach dem Backen in Trägern eines abgabeseitigen Paternosteraufzugs gespeichert. Von dort werden eine oder mehrere Backwaren in einem Sammelspeicher abgelegt und bei Kundenabruf zu einem Ausgabefach geleitet. In einer alternativen Ausführungsform werden die angeforderten Backwaren direkt von einem Träger zu einem Ausgabefach gefördert. Weiterer relevanter Stand der Technik ist aus der DE 10 2005 012 536 A1 bekannt. Es ist die Aufgabe der vorliegenden Erfindung, den bekannten Backautomaten weiter zu verbessern, insbesondere hinsichtlich seiner Bedien- und Wartungsfreundlichkeit.

Diese Aufgabe wird durch die Merkmale des Anspruchs 1 gelöst.

Die Vorteile der Erfindung liegen u.a. insbesondere darin, dass mit Hilfe des mindestens einen stationären Linearförderers die Zugänglichkeit zu den einzelnen Elementen des Backautomaten erleichtert wird. Sowohl die aufgabenseitige, erste Fördereinrichtung als auch die Ofeneinheit sind leichter für Bedien- sowie Servicepersonal erreichbar. Auch ist das Säubern der einzelnen Maschinenteile einfacher. Des weiteren ermöglicht die Erfindung einen sicheren Transport der Backwaren von den vorzugsweise umlaufenden Trägern der aufgabeseitigen, ersten Fördereinrichtung zur Ofeneinheit. Wenn der stationäre Linearförderer und die Transporteinrichtung der Ofeneinheit zudem in einer gemeinsamen horizontalen Ebene verlaufen, ist die Fehlerquote bei der dortigen Übergabe der Backwaren sehr gering. Die vorhergehende Übergabe der Backwaren von Trägern der Fördereinrichtung auf eine nachfolgende Transporteinrichtung ist hingegen prinzipiell fehleranfälliger. Es ist daher vorteilhaft, wenn diese Fehleranfälligkeit von der Ofeneinheit fern gehalten wird, um im Bereich des Ofens weniger häufig eingreifen zu müssen. Außerdem ist es in einfacher Weise möglich, bei einer fehlerhaften Übergabe von den Trägern auf den Linearförderer den letzteren automatisch zu reinigen, wie weiter unten erläutert wird.

Besonders vorteilhaft ist der besagte mindestens eine stationäre Linearförderer parallel zur Längserstreckung der Träger der ersten Fördereinrichtung ausgerichtet. Die Backwaren können durch eine einfache Schub-, Kipp- oder Hebebewegung auf den stationären Linearförderer verbracht werden, der dann die Backwaren seitlich abtransportiert und zum Ofen befördert. Durch die besagte parallele Ausrichtung ist die Rückseite der ersten Fördereinrichtung leicht zugänglich.

Die Längserstreckung bzw. die Laufrichtung des Linearförderers ist senkrecht zu der Förderrichtung der Backwaren durch die Ofeneinheit. Der stationäre Linearförderer transportiert hierbei die Backwaren aus seitlicher Richtung zum Ofen, bevor diese dann um 90° umgelenkt werden. Zusammen mit der vorbeschriebenen parallelen Ausrichtung des Linearförderers zu den Trägern ist der Transportweg der Backwaren dann wie folgt: Abgabe der Backwaren von den Trägern auf den Linearförderer senkrecht zur Träger-Längserstreckung, seitlicher Abtransport der Backwaren auf dem Linearförderer, Abgabe der Backwaren senkrecht zur Längserstreckung des Linearförderers auf die Transporteinrichtung der Ofeneinheit.

In einer Weiterbildung der Erfindung weist die Aufgabeeinheit zwei Fördereinrichtungen mit vorzugsweise umlaufenden Trägern auf, die über jeweils einen Linearförderer mit der Ofeneinheit verbunden sind. Bei einer solchen Modulanordnung kann für jede Aufgabeeinheit ein eigener Durchlaufbackofen vorgesehen sein. Die beiden Durchlaufbacköfen der Ofeneinheit können hierbei vorteilhafterweise direkt nebeneinander angeordnet sein. Der eine oder die beiden derart angeordneten Öfen werden von den beiden voneinander beabstandeten aufgabeseitigen, ersten Fördereinrichtungen über ihre jeweiligen stationären Linearförderer mit Backwaren beliefert, die in diesem Fall aufeinander zu transportiert werden, bevor sie parallel durch den oder die Öfen gefördert werden.

Der mindestens eine stationäre Linearförderer ist gemäß einer vorteilhaften Ausführungsform auf der Aufgabeseite der ersten Fördereinrichtung angeordnet. Diese Ausgestaltung kann auch als eigener Erfindungsaspekt angesehen werden. Der Linearförderer befindet sich hierbei also im Wesentlichen oberhalb des Personals, das die Backwaren in die Träger einlegt. Hierdurch wird Bauraum eingespart, da bei einer Anordnung auf der anderen Seite der Fördereinrichtung der Backautomat um die Breite des Linearförderers breiter bzw. tiefer wäre.

Vorteilhafterweise ist die Drehrichtung des mindestens einen Linearförderers umkehrbar. Auf diese Weise erhöht sich die Flexibilität beim An- und Abtransport der Backwaren von den Trägern bzw. zur Ofeneinheit.

Für einen reibungslosen Förderablauf auch bei temporärer Fehlförderung von Backwaren hat es sich als vorteilhaft erwiesen, wenn sich stirnseitig am Ende des mindestens einen stationären Linearförderers eine Sammeleinrichtung befindet, in welche Backwaren, die nicht in den mindestens einen Durchlaufbackofen gelangt sind, gefördert werden. Auch diese Ausgestaltung kann als eigener Erfindungsaspekt angesehen werden. Da solche Fehlförderungen aufgrund des relativ komplexen Förderwegs nicht vollständig auszuschließen sind, können auf dem Linearförderer verbliebene Backwaren rasch in die Sammeleinrichtung transportiert werden, ohne das Betriebspersonal eingreifen müsste. Der Linearförderer kann derart betrieben werden, dass er nach jeder erfolgten oder vermeintlichen Übergabe an die Transporteinrichtung der Ofeneinheit derart betrieben wird, dass zwangsläufig alle auf ihm ggf. verbliebenen Backwaren in die Sammeleinrichtung transportiert werden.

Die Sammeleinrichtung kann gemäß einer vorteilhaften Ausführungsform einen Fallschacht umfassen, in den die Backwaren vom Linearförderer fallend geworfen werden.

Im Falle von zwei Linearförderern, die jeweils einer Fördereinrichtung mit vorzugsweise umlaufenden Trägern zugeordnet sind, sind diese vorteilhafterweise derart angeordnet, dass Backwaren von einem zum anderen übergeben werden können. Die beiden Linearförderer sind hierbei zweckmäßigerweise zueinander fluchtend ausgerichtet sein. Durch die Möglichkeit der Übergabe von Backwaren von einem Linearförderer zum anderen ist lediglich eine einzige Sammeleinrichtung notwendig.

Die Übergabe der Backwaren von den Trägern auf den mindestens einen stationären Linearförderer und/oder von dem mindestens einen Linearförderer zur Transporteinrichtung der Ofeneinheit erfolgt bevorzugt mittels Schieber, vorzugsweise Linearschieber, die durch Elektromotoren betrieben werden. Pro Backware kann ein Schieber vorgesehen sein. Alternativ ist ein Schieber für mehrere Backwaren zuständig. Andere Übergabeeinrichtungen sind ohne Weiteres möglich.

Besonders bevorzugt behalten die auf einem Träger der ersten Fördereinrichtung abgelegten Backwaren die gleiche Relativlage zueinander bis zur Abgabe von einem Träger der zweiten Fördereinrichtung. Es wird hierdurch ein leicht zu regelnder und übersichtlicher Backwarenfluss ermöglicht.

Vorteilhafterweise ist die Ofeneinheit im Wesentlichen oberhalb und von seiner Unterseite her begehbar zwischen der Aufgabe- und der Abgabeeinheit angeordnet. Diese Ausgestaltung ermöglicht sowohl ein leichtes Reinigen als auch eine leichte Zugänglichkeit für Wartungspersonal. Zudem kann der Platz unter dem Backofen als Staufläche verwendet werden.

Weitere Vorteile und vorteilhafte Weiterbildungen der Erfindung ergeben sich aus den Unteransprüchen sowie den Figuren, anhand derer im Folgenden Ausführungsbeispiele der Erfindung näher erläutert werden. Es zeigen schematisch:
- **Figur 1**: einen erfindungsgemäßen Backautomaten im Querschnitt;
- **Figur 2**: den Backautomaten gemäß der Figur 1 in einer Draufsicht;
- **Figur 3**: den Backautomaten gemäß der Figuren 1 und 2 von der Bedienerseite her, und
- **Figur 4**: eine Draufsicht auf einen Backautomaten mit zwei aufgabeseitigen und zwei abgabeseitigen Fördereinrichtungen sowie zwei Durchlaufbacköfen.

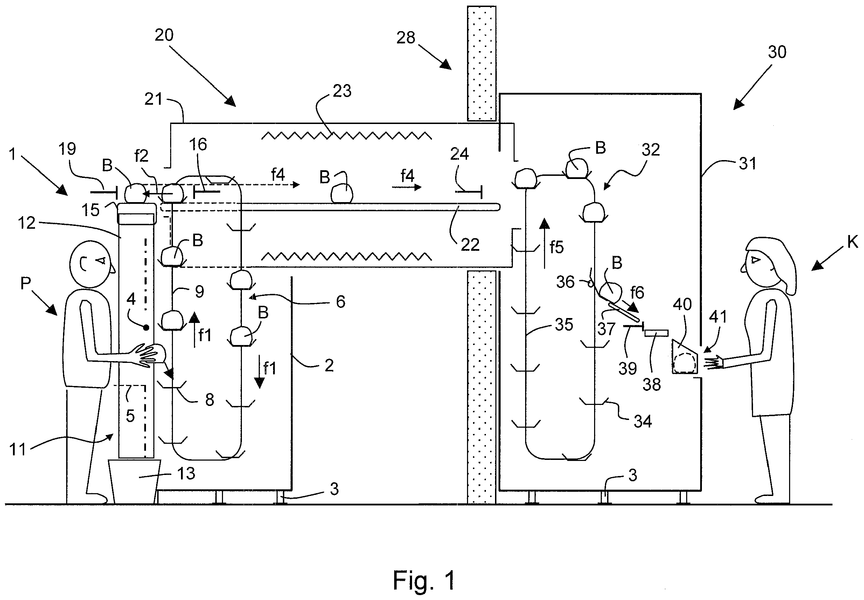

Die Figuren 1-3 zeigen schematische Ansichten eines erfindungsgemäßen Backautomaten, wobei der Übersichtlichkeit halber einige Teile nicht in allen Figuren wiedergegeben sind. Der Backautomat weist als Hauptbestandteile eine Aufgabeeinheit 1 zur Aufgabe von zu backenden oder fertig zu backenden Backwaren B (Brötchen, Brote, Baguette, Brezel usw.), eine Ofeneinheit 20 sowie eine Abgabeeinheit 30 zur Abgabe von verzehrfertigen Backwaren nach Kundenabruf auf. Im vorliegenden Fall sind als Backwaren B beispielhaft Brote gewählt.

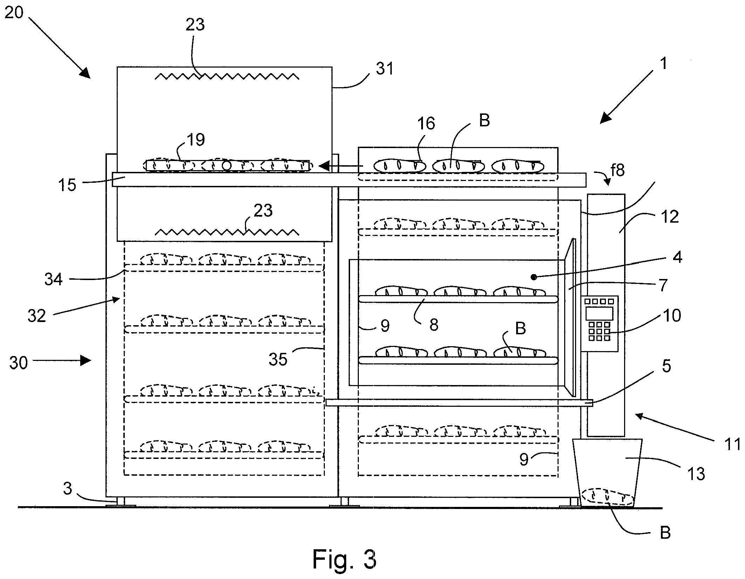

Die Aufgabeeinheit 1 weist ein auf Füßen 3 stehendes Gehäuse 2 auf, in welchem eine aufgabenseitige, erste Fördereinrichtung 6 in Form eines Paternosteraufzugs 6 angeordnet ist. Hierzu ist eine Vielzahl von länglichen Trägern 8 an ihren jeweiligen Stirnseiten mit motorbetriebenen Förderketten 9 verbunden. Bedienpersonal P legt vorzugsweise manuell Backwaren B nebeneinander auf die Träger 8 auf. Zu diesem Zweck ist in dem Gehäuse 2 eine Öffnung 4 vorgesehen, die mittels einer Tür 7 verschließbar ist (s. Figur 3). Vor der Öffnung ist bei der dargestellten Ausführungsform ein Aufgabetisch 5 vorgesehen, auf dem insbesondere ein Behältnis, beispielsweise ein Karton, mit Backwaren abgestellt werden kann.

Das Personal kann über ein Eingabepanel mit Display 10 einen freien, d.h. noch nicht mit Backwaren B bestückten Träger 8 anfordern. Auf dem Display können zudem Anweisungen für das Personal ausgegeben werden, welche Backwarensorte beispielsweise im Moment aufgrund des Kundenbedarfs gebacken werden soll.

Die erste Fördereinrichtung 6 läuft in Pfeilrichtung f1 um, kann aber auch in entgegengesetzter Richtung betrieben werden. Insbesondere bei Anforderung eines freien Trägers 8 zur Bestückung mit Backwaren B bietet sich dieses an, um ggf. die Fahrzeit eines entsprechenden Trägers 8 zu verkürzen.

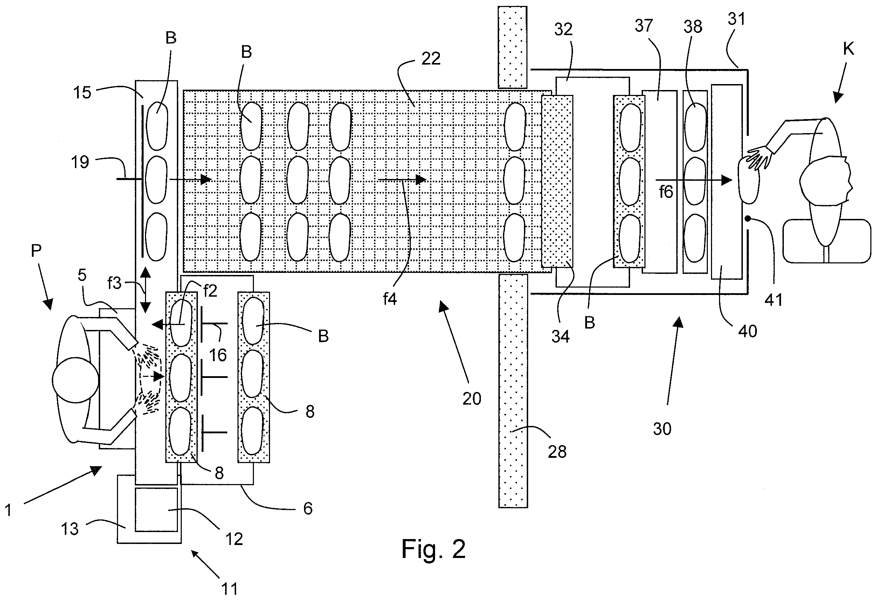

Die noch nicht gebackenen oder vorgebackenen Backwaren B werden in der Fördereinrichtung 6 gespeichert, bis eine nicht dargestellte und für den Fachmann gebräuchliche Steuerung ihren Weitertransport veranlasst. Zu diesem Zweck ist im oberen Bereich, auf der dem Bedienpersonal P zugewandten Seite ein stationärer Linearförderer 15 vorgesehen, der beispielsweise als Förderband ausgebildet ist und seitwärts in Richtung der Längserstreckung der Träger 8 verläuft. Wie insbesondere den Figuren 1 und 2 zu entnehmen ist, werden Backwaren B von einem entsprechend in Position gefahrenen Träger 8 durch Schieber 16 auf den Linearförderer 15 geschoben. Andere Übergabemechanismen - auch an anderen Stellen des Backautomaten, s. weiter unten - sind ohne Weiteres ebenfalls möglich, beispielsweise durch Abkippen der Backwaren B von den Trägern 8 auf den Linearförderer 15.

Die Laufrichtung des stationären Linearförderers 15 ist umkehrbar, s. Doppelpfeil f3. Im Vorwärtslauf transportiert der Linearförderer 15 die Backwaren B zur Einlauföffnung des Gehäuses 21 der Ofeneinheit 20. Durch diese führt eine Transporteinrichtung 22, die beispielsweise als umlaufender Kettenglied- bzw. Netzförderer ausgebildet ist. Zur Übergabe der Backwaren B vom Linearförderer 15 auf die Transporteinrichtung 22 ist vorliegend ein breiter Schieber 19 vorgesehen, der motorgesteuert betrieben wird. Es ist möglich, statt eines einzigen Schiebers 19 mehrere Schieber vorzusehen, die jeweils für eine oder nur einen Teil der Backwaren B zuständig sind. Im umgekehrten Sinne gilt dies auch für die Schieber 16.

In der Ofeneinheit 20 sind Heizelemente 23 angeordnet, die als herkömmliche Heizwendeln ausgebildet sein können. Die Durchlaufgeschwindigkeit und/oder die Backtemperatur können fest vorgegeben oder auch elektronisch gesteuert sein. Eine Anpassung an die jeweilige Backwarenart bietet sich an.

Die Ofeneinheit 20 ist von unten zugänglich, da durch die Zwischenschaltung des stationären Linearförderers 15 die Backwaren zweimal um 90° umgelenkt werden. Für Bedien- und Servicepersonal ergibt sich somit eine sehr einfache Zugänglichkeit zur Ofeneinheit 20.

An die Ofeneinheit 20 schließt sich die Abgabeeinheit 30 an, die wiederum von einem Gehäuse 31 umgeben ist. Die Abgabeeinheit 30 ist zur Aufstellung in einem Verkaufsraum eines Supermarkts o.ä. vorgehen, wobei zur Minimierung der Standfläche des Backautomaten in dem Verkaufsraum die Aufgabeeinheit 1 und die Ofeneinheit 20 außerhalb des Verkaufsraums und von diesem durch eine Mauer 28 getrennt aufgestellt werden.

Nach dem Backen bzw. Aufbacken werden die Backwaren mittels Schieber 24 (nur in Figur 1 dargestellt) von der Transporteinrichtung 22 auf umlaufende Träger 34 einer zweiten umlaufenden Fördereinrichtung 32 in Form eines Paternosteraufzugs geschoben, die durch stirnseitige Förderketten 35 angetrieben in der Abgabeeinheit 30 angeordnet ist und die fertig gebackenen Backwaren B bis zur Abgabe an einen Kunden K speichert. Ein entsprechendes Bedienungsdisplay für den Kunden K mit Anzeige der verschiedenen verfügbaren Backwaren B ist hier nicht dargestellt, dem Fachmann aber ohne Weiteres bekannt.

Zwischen Träger 34 und einem für den Kunden K zugänglichen Ausgabefach 41 ist ein Zwischenspeicher 38 vorgesehen, auf den die Backwaren B gemäß der hier dargestellten Ausführungsform von einem Träger 34 gekippt werden. Hierzu läuft der entsprechende Träger 34 von oben gegen durch elektronische Ansteuerung in eine Ruhe- und eine Arbeitsposition verfahrbare Stifte 36 an, wobei dieser Träger 34 verschwenkt wird. Die Backwaren B rutschen dann auf einer ersten Rutsche 37 auf den genannten Zwischenspeicher 38, von dem eine oder mehrere Backwaren B nach Anforderung durch einen Kunden K mittels Schieber 39 in eine Trichterrutsche 40 geschoben werden, auf der die angeforderten Backwaren B zu dem Ausgabefach 41 gleiten.

Da die Backwaren nur lose auf allen Transportelementen aufliegen, kann die Übergabe zum jeweils nachfolgenden nicht immer gewährleistet sein. Zu diesem Zweck ist speziell für den Linearförderer 15 eine Sammeleinrichtung 11 vorgesehen, welche sich an seiner der Ofeneinheit 20 abgewandten Stirnseite befindet. Die Sammeleinrichtung 11 besteht im vorliegenden Fall aus einem senkrecht verlaufenden Fallschacht 12 und einem darunter abgestellten Sammelbehälter 13, der manuell entleert werden kann.

Wenn Backwaren B nicht erfolgreich vom Linearförderer 15 auf die Transporteinrichtung 22 geschoben werden konnten, wird die Förderrichtung des Linearförderers 15 umgekehrt und dieser so lange betrieben, bis alle sich auf ihm noch befindlichen Backwaren B in den Fallschacht 12 abgeworfen wurden. Der Rücklauf des Linearförderers 15 kann beispielsweise nach jeder Betätigung des Schiebers 19 initiiert werden, so dass der Linearförderer 15 auch bei erfolgreicher Übergabe der Backwaren B an die Transporteinrichtung 22 nichtsdestotrotz zurückläuft. Gemäß einer Alternative kann der Rücklauf ausgelöst werden, wenn ein Sensor (nicht dargestellt) die Anwesenheit von mindestens einer Backware B auf dem Linearförderer nach Betätigung des Schiebers 19 registriert. In jedem Fall ist der Rücklaufweg des Linearförderers 15 stets länger als der Transportweg von den Trägern 8 zur Übergabeposition vor der Ofeneinheit 20.

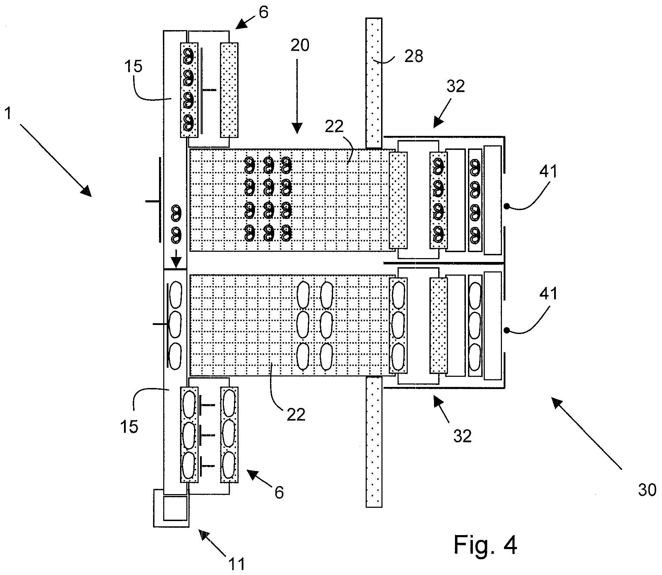

In Figur 4 ist in schematischer Draufsicht ein Backautomat dargestellt, bei dem die Aufgabeeinheit 1 zwei Fördereinrichtungen 6, die Ofeneinheit 20 zwei Durchlaufbacköfen und die Abgabeeinheit 30 ebenfalls zwei Fördereinrichtungen 32 mit zwei Ausgabefächern 41 aufweist, wobei jeweils ein stationärer Linearförderer 15 die beiden Durchlaufbacköfen beliefert. In den Trägern 8 der beiden Fördereinrichtungen 6 sind verschiedene Backwaren B, einerseits Brote und andererseits Brezeln, gespeichert. Während jeweils drei Brote auf einem Träger 8 gelegt werden, sind es im Falle der Brezeln vier.

Es ist selbstverständlich auch möglich, dass verschiedene Backwaren B auf verschiedene Träger 8 einer einzelnen Fördereinrichtung 6 aufgelegt und in entsprechend vorgesehene unterschiedliche Zwischenspeicher in der Abgabeeinheit 30 zum Abruf vorgehalten werden. Eine solche Variabilität ermöglicht es, den unterschiedlichen räumlichen Gegebenheiten, dem Kundenaufkommen und den Geschmacksvorlieben in den jeweiligen Regionen und den jeweiligen Supermärkten anzupassen. Durch die in Figur 4 beispielhaft dargestellte Modulbauweise können nicht nur größere Mengen unterschiedlicher Backwaren angeboten werden, auch die gesamte Durchsatzmenge ist selbstverständlich größer im Vergleich zu der Ausführung gemäß der Figuren 1-3.

Der Backautomat gemäß der Figur 4 weist nur eine Sammeleinrichtung 11 auf. Damit auch nicht in die Ofeneinheit 20 geförderte Brezeln von diesem (in Figur 4 oberen) stationären Linearförderer 15 entfernt werden können, wird dieser Linearförderer 15 weiter im Vorwärtslauf betrieben, um die (im vorliegenden Fall zwei) Brezeln an den anderen (in Figur 4 unteren) stationären Linearförderer 15 zu übergeben, der diese Brezeln dann zur Sammeleinrichtung 11 transportiert und entsorgt. Das Bedienpersonal muss also lediglich einen einzigen Sammelbehälter 13 einleeren. Zudem wird das Material für eine weitere Sammeleinrichtung 11 eingespart, der zudem den Raumbedarf erhöhen würde.

Die gesamten Abläufe in dem erfindungsgemäßen Backautomaten werden bevorzugt durch eine (nicht dargestellte) zentrale elektrische Steuer- und Regeleinrichtung gesteuert. Diese steuert insbesondere den Transport der Backwaren, ermittelt den Bedarf an nachzubackenden Backwaren und zeigt dies an dem Eingabepanel mit Display 10 an.

### Bezugszeichenliste

- 1: Aufgabeeinheit
- 2: Gehäuse
- 3: Füße
- 4: Öffnung
- 5: Aufgabetisch
- 6: Fördereinrichtung
- 7: Tür
- 8: Träger
- 9: Förderkette
- 10: Eingabepanel mit Display
- 11: Sammeleinrichtung
- 12: Fallschacht
- 13: Sammelbehälter
- 15: Linearförderer
- 16: Schieber
- 19: Schieber
- 20: Ofeneinheit
- 21: Gehäuse
- 22: Transporteinrichtung
- 23: Heizelemente
- 24: Schieber
- 28: Mauer
- 30: Abgabeeinheit
- 31: Gehäuse
- 32: Fördereinrichtung
- 34: Träger
- 35: Förderkette
- 36: Schwenkschengel
- 37: erste Rutsche
- 38: Zwischenspeicher
- 39: Schieber
- 40: Trichterrutsche
- 41: Ausgabefach

## Patentansprüche

1. Backautomat mit einer Aufgabeeinheit (1) zur insbesondere manuellen Aufgabe von Backwaren (B), wobei die Aufgabeeinheit (1) mindestens eine erste Fördereinrichtung (6) mit einer Vielzahl von in der Aufgabeeinheit (1) umlaufenden Trägern (8) zur Aufnahme von jeweils mehreren vereinzelten Backwaren (B) nebeneinander in Richtung der Längserstreckung des jeweiligen Trägers (8) umfasst, mit einer der Aufgabeeinheit (1) nachgeschalteten Ofeneinheit (20) mit einer Transporteinrichtung (22) zum Durchfördern der Backwaren (B), sowie mit einer der Ofeneinheit (20) nachgeschalteten Abgabeeinheit (30), wobei die Abgabeeinheit (30) mindestens eine zweite Fördereinrichtung (32) mit einer Vielzahl von in der Abgabeeinheit umlaufenden Trägern (34) zur Aufnahme von jeweils mehreren Backwaren (B) nebeneinander umfasst, von dem die Backwaren (B) zu mindestens einem Ausgabefach (41) geleitet werden, **dadurch gekennzeichnet, dass** mindestens ein stationärer Linearförderer (15) für die Backwaren (B) zwischen der mindestens einen ersten Fördereinrichtung (6) und der Transporteinrichtung (22) der Ofeneinheit (20) angeordnet ist, und dass die Förderrichtung (f3) des mindestens einen Linearförderers (15) parallel zur Längserstreckung der Träger (8) der ersten Fördereinrichtung (6) und senkrecht zur Förderrichtung (f4) der Backwaren (B) durch die Ofeneinheit (20) ist, und dass die Förderrichtung (f2) der Backwaren (B) von der Aufgabeeinheit (1) auf den stationären Linearförderer (15) und die Förderrichtung (f4) der Backwaren (B) durch die Ofeneinheit (20) parallel und entgegengesetzt zueinander verlaufen.

2. Backautomat nach Anspruch 1, **dadurch gekennzeichnet, dass** der Linearförderer (15) und die Transporteinrichtung (22) derart angeordnet sind, dass sie die Backwaren (B) in einer gemeinsamen Horizontalebene transportieren.

3. Backautomat nach Anspruch 1 oder 2, **dadurch gekennzeichnet, dass** die Aufgabeeinheit (1) zwei Fördereinrichtungen (6) umfasst, wobei beide Fördereinrichtungen (6) über jeweils einen besagten Linearförderer (15) mit der Ofeneinheit (20) verbunden sind.

4. Backautomat nach Anspruch 3, dadurch gekenntzeichnet, dass die Linearförderer (15) die jeweiligen Backwaren (B) aufeinanderzu zu fördern vermögen, bevor sie in die Ofeneinheit (20) gefördert werden.

5. Backautomat nach einem der vorhergehenden Ansprüche, **dadurch gekennzeichnet, dass** die Ofeneinheit (20) zwei nebeneinander angeordnete Durchlaufbacköfen umfasst, wobei jeder Durchlaufbackofen mit voneinander beabstandet angeordneten Fördereinrichtungen (6) über jeweils einen der besagten Linearförderer (15) verbunden ist.

6. Backautomat nach Anspruch 5, **dadurch gekennzeichnet, dass** die beiden Linearförderer (15) derart angeordnet sind, dass Backwaren (B) von einem zum anderen Linearförderer (B) übergebbar sind.

7. Backautomat nach einem der vorhergehenden Ansprüche, **dadurch gekennzeichnet, dass** der mindestens eine Linearförderer (15) auf der Aufgabeseite der ersten Fördereinrichtung (6) oberhalb einer Bedienperson, welche die Backwaren (BW) in die Träger (8) einlegt, angeordnet ist.

8. Backautomat nach einem der vorhergehenden Ansprüche, **dadurch gekennzeichnet, dass** die Drehrichtung des mindestens einen Linearförderers (15) umkehrbar ist.

9. Backautomat nach einem der vorhergehenden Ansprüche, **dadurch gekennzeichnet, dass** sich an die Laufstrecke mindestens eines Linearförderers (15) eine Sammeleinrichtung (11) anschließt, in die nicht in die Ofeneinheit (20) gelangende Backwaren (B) förderbar sind.

10. Backautomat nach Anspruch 9, **dadurch gekennzeichnet, dass** die Sammeleinrichtung (11) einen Fallschacht (12) umfasst.

11. Backautomat nach einem der vorhergehenden Ansprüche, **dadurch gekennzeichnet, dass** Schieber (16, 19) vorgesehen sind zur Übergabe der Backwaren (B) von den Trägern (8) auf den mindestens einen Linearförderer (15) und/oder von dem mindestens einen Linearförderer (15) zu der Transporteinrichtung (22) der Ofeneinheit (20).

12. Backautomat nach einem der vorhergehenden Ansprüche, **dadurch gekennzeichnet, dass** die auf einem Träger (8) der ersten Fördereinrichtung (6) abgelegten Backwaren (B) die gleiche Relativlage zueinander bis zur Abgabe von einem Träger (34) der zweiten Fördereinrichtung (32) behalten.

13. Backautomat nach einem der vorhergehenden Ansprüche, **dadurch gekennzeichnet, dass** die Ofeneinheit (20) im Wesentlichen oberhalb und von seiner Unterseite her begehbar zwischen der Aufgabeeinheit (1) und der Abgabeeinheit (30) angeordnet ist.

## Claims

1. Automatic baking machine with a loading unit (1) for especially the manual loading of baked goods (B), wherein the loading unit (1) comprises at least one first conveyor device (6) equipped with numerous carriers (8) circulating in the loading unit (1) for receiving several adjacent individual baked goods (B) adjacent in the direction of the longitudinal extension of the respective carrier (8), with an oven unit (20) mounted downstream from the loading unit (1) and having a transportation device (22) for transporting through the baked goods (B), as well as with a delivery unit (30) mounted downstream from the baking device (20), the delivery unit (30) comprising at least a second conveyor device (32) with numerous carriers (34) circulating in the delivery unit for receiving several adjacent baked goods (B), wherefrom the baked goods (B) are guided to at least one dispensing compartment (41), **characterized in that** at least one stationary linear conveyor (15) for the baked goods (B) is arranged between the at least one first conveyor device (6) and the transportation device (22) of the oven unit (20) and that the conveying direction (f3) of the at least one linear conveyor (15) runs parallel to the longitudinal extension of the carriers (8) of the first conveyor device (6) and perpendicularly to the conveying direction (f4) of the baked goods (B) through the oven unit (20) and that the conveying direction (f2) of the baked goods (B) from the loading unit (1) onto the stationary linear conveyor (15) and the conveying direction (f4) of the baked goods (B) through the oven unit (20) run parallel and opposed to each other.

2. Automatic baking machine according to claim 1, **characterized in that** the linear conveyor (15) and the transportation device (22) are arranged in such a manner that they transport the baked goods (B) along a common horizontal plane.

3. Automatic baking machine according to claim 1 or 2, **characterized in that** the loading unit (1) comprises two conveyor devices (6), wherein each of both conveyor devices (6) is connected to the oven unit (20) via a said linear conveyor (15).

4. Automatic baking machine according to claim 3, **characterized in that** the linear conveyors (15) can transport the respective baked goods (B) towards each other before they are transported into the oven unit (20).

5. Automatic baking machine according to one of the preceding claims, **characterized in that** the oven unit (20) comprises two continuous baking ovens arranged beside one another, wherein each one of the continuous baking ovens is connected with conveyor devices (6), which are separately arranged from one another, via one of the said linear conveyors (15).

6. Automatic baking machine according to claim 5 **characterized in that** the two linear conveyors (15) are arranged so that the baked goods (B) can be passed from one linear conveyor (B) to the other one.

7. Automatic baking machine according to one of the preceding claims, **characterized in that** the at least one linear conveyor (15) is arranged on the loading side of the first conveyor device (6) above an operator who puts the baked goods (BW) into the carriers (8).

8. Automatic baking machine according to one of the preceding claims, **characterized in that** the rotational direction of the at least one linear conveyor (15) is reversible.

9. Automatic baking machine according to one of the preceding claims, **characterized in that** a collection device (11) is following the running path of at least one linear conveyor (15) on which the baked goods (B) that do not reach the oven unit (20) can be transported.

10. Automatic baking machine according to claim 9, **characterized in that** the collection device (11) comprises one chute (12).

11. Automatic baking machine according to one of the preceding claims, **characterized in that** sliders (16, 19) are provided for transferring the baked goods (B) from the carriers (8) to the at least one linear conveyor (15) and/or from the at least one linear conveyor (15) to the transportation device (22) of the oven unit (20).

12. Automatic baking machine according to one of the preceding claims, **characterized in that** the baked goods (B) deposited on a carrier (8) of the first conveyor device (6) maintain the same relative position with respect to each other until a carrier (34) of the second conveyor device (32) delivers them.

13. Automatic baking machine according to one of the preceding claims, **characterized in that** the oven unit (20) is essentially arranged above the loading unit (1) and the delivery unit (30) and is accessible from below.

## Revendications

1. Four automatique avec une unité d'alimentation (1) pour, en particulier, l'alimentation manuelle en produits de boulangerie et de pâtisserie (B), sachant que l'unité d'alimentation (1) comporte au moins un premier dispositif de transport (6) avec une multitude de supports (8) circulant dans l'unité d'alimentation (1) pour accueillir respectivement plusieurs produits de boulangerie et de pâtisserie (B) isolés côte à côte dans la direction de l'étendue longitudinale de chacun des supports (8), avec une unité de four (20) disposée en aval de l'unité d'alimentation (1) avec un dispositif de transport (22) pour le transport continu des produits de boulangerie et de pâtisserie (B), ainsi qu'avec une unité de sortie (30) disposé en aval de l'unité de four (20), sachant que l'unité de sortie (30) comporte au moins un second dispositif de transport (32) avec une multitude de supports (34) circulant dans l'unité de sortie pour accueillir respectivement plusieurs produits de boulangerie et de pâtisserie (B) isolés côte à côte, à partir de laquelle les produits de boulangerie et de pâtisserie (B) sont transportés vers au moins un bac de sortie (41), **caractérisé en ce qu'**au moins un convoyeur linéaire (15) stationnaire pour les produits de boulangerie et de pâtisserie (B) est disposé entre l'au moins un premier dispositif de transport (6) et le dispositif de transport (22) de l'unité de four (20), et que le sens de transport (f3) de l'au moins un convoyeur linéaire (15) est parallèle à l'étendue longitudinale des supports (8) du premier dispositif de transport (6) et perpendiculaire au sens de transport (f4) des produits de boulangerie et de pâtisserie (B) à travers l'unité de four (20), et que le sens de transport (f2) des produits de boulangerie et de pâtisserie (B) depuis l'unité d'alimentation (1) sur le convoyeur linéaire (15) stationnaire et le sens de transport (f4) des produits de boulangerie et de pâtisserie (B) à travers l'unité de four (20) sont parallèles et opposés l'un à l'autre.

2. Four automatique selon la revendication 1, **caractérisé en ce que** le convoyeur linéaire (15) stationnaire et le dispositif de transport (22) sont disposés de manière à transporter les produits de boulangerie et de pâtisserie (B) sur un même plan horizontal.

3. Four automatique selon la revendication 1 ou 2, **caractérisé en ce que** l'unité d'alimentation (1) comporte deux dispositifs de transport (6), sachant que les deux dispositifs de transport (6) sont respectivement reliés avec l'unité de four (20) via un dit convoyeur linéaire (15) stationnaire.

4. Four automatique selon la revendication 3, **caractérisé en ce que** les convoyeurs linéaires (15) peuvent transporter les différents produits de boulangerie et de pâtisserie (B) les uns sur les autres avant qu'ils ne soient transportés dans l'unité de four (20).

5. Four automatique selon l'une des revendications précédentes, **caractérisé en ce que** l'unité de four (20) comporte deux fours tunnels disposés côte à côte, sachant que chaque four tunnel est relié avec des dispositifs de transport (6) disposés à distance les uns des autres via respectivement l'un desdits convoyeurs linéaires (15).

6. Four automatique selon la revendication 5, **caractérisé en ce que** les deux convoyeurs linéaires (15) sont disposés de manière à ce que les produits de boulangerie et de pâtisserie (B) puissent être transmis de l'un des convoyeurs linéaires (B) à l'autre.

7. Four automatique selon l'une des revendications précédentes, **caractérisé en ce que** l'au moins un convoyeur linéaire (15) est disposé sur le côté d'alimentation du premier dispositif de transport (6) au-dessus d'une personne de commande, qui place les produits de boulangerie et de pâtisserie (BW) dans les supports (8).

8. Four automatique selon l'une des revendications précédentes, **caractérisé en ce que** le sens de rotation de l'au moins un convoyeur linéaire (15) est inversible.

9. Four automatique selon l'une des revendications précédentes, **caractérisé en ce qu'**un dispositif de collecte (11) s'enchaîne au parcours de déplacement d'au moins un convoyeur linéaire (15), dans laquelle peuvent être transportés les produits de boulangerie et de pâtisserie (B) ne parvenant pas dans l'unité de four (20).

10. Four automatique selon la revendication 9, **caractérisé en ce que** le dispositif de collecte (11) comporte un puits de chute (12).

11. Four automatique selon l'une des revendications précédentes, **caractérisé en ce que** des coulisseaux (16, 19) sont prévus pour la remise des produits de boulangerie et de pâtisserie (B) depuis les supports (8) sur l'au moins un convoyeur linéaire (15) et/ou depuis l'au moins un convoyeur linéaire (15) vers le dispositif de transport (22) de l'unité de four (20).

12. Four automatique selon l'une des revendications précédentes, **caractérisé en ce que** les produits de boulangerie et de pâtisserie (B) déposés sur un support (8) du premier dispositif de transport (6) conservent la même position relative les uns par rapport aux autres jusqu'à la sortie depuis un support (34) du second dispositif de transport (32).

13. Four automatique selon l'une des revendications précédentes, **caractérisé en ce que** l'unité de four (20) est disposée entre l'unité d'alimentation (1) et l'unité de sortie (30) de manière essentiellement accessible par le haut et par son côté inférieur.
